# FASCICULE DE BREVET EUROPEEN

(11) **EP 2 025 181 B1**
(45) Date de publication et mention de la délivrance du brevet: **16.03.2011**
(21) Numéro de dépôt: 07788953.3
(22) Date de dépôt: 01.06.2007
(51) Int. Cl.: H04W 8/18, H04L 12/18, H04N 7/20, H04N 7/16

(54) **SYSTEME D'ACCES A UN SERVICE DE TELEVISION SUR IP DANS UN RESEAU A ARCHITECTURE IMS**
SYSTEM ZUM ZUGRIFF AUF EIN IP-FERNSEHDIENST IN EINEM IMS-ARCHITEKTUR-NETZWERK
SYSTEM FOR ACCESSING AN IP TELEVISION SERVICE IN AN IMS ARCHITECTURE NETWORK

(30) Priorité: 08.06.2006 FR 0652066
(43) Date de publication de la demande: 18.02.2009
(73) Titulaire: FRANCE TELECOM, 75015 Paris (FR)
(72) Inventeur: CRASSOUS, Magali, F-13320 Bouc Bel Air (FR); SAID, Mikhaël, F-75003 Paris (FR)
(86) Numéro de dépôt international: PCT/FR2007/051366
(87) Numéro de publication internationale: WO 2007/141450

(56) Documents cités:
- WO-A-02/073965
- US-A1- 2006 040 638

## Description

La présente invention concerne une technique d'activation d'un service dans un réseau de type IP ("Internet Protocol") présentant une architecture IMS («IP Multimedia Subsystem») à partir d'un terminal d'un utilisateur connecté au réseau.

L'invention trouve une application particulièrement avantageuse dans le domaine des réseaux IP permettant la diffusion de données audiovisuelles, ainsi que dans le domaine de l'IMS défini dans les organismes de normalisation 3GPP («3rd Generation Partnership Project») et TISPAN («Telecommunications and Internet converged Services and Protocols for Advanced Networking»).

L'IMS est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux médias. Elle gère aussi l'interaction de services.

L'IMS ne permet actuellement d'accéder qu'à des services de type téléphonie, visiophonie, présence et messagerie instantanée.

On connaît par ailleurs, un service de télévision sur IP, désigné par IPTV ("Internet Protocol TeleVision"), qui permet la réception de chaînes de télévision dans un réseau IP. La mise en oeuvre de ce service de télévision sur IP nécessite l'obtention au niveau du terminal des adresses des chaînes souscrites par l'abonné utilisateur.

Les solutions fournies actuellement pour mettre en oeuvre ce service sont le plus souvent propriétaires. Elles permettent, via une plate-forme dédiée à l'IPTV dans des réseaux fixes ou mobiles, au terminal utilisateur de récupérer la liste des adresses IP des chaînes autorisées, appelée "plan de service". Cette récupération peut se faire en http ("Hyper Text Transfer Protocol"), le plan de service étant compris dans les données véhiculées par ce protocole. En revanche, la réservation de ressources associées à cette liste de chaînes n'est pas définie ; elle est souvent statique, sans aucune flexibilité possible.

Un inconvénient de l'architecture IMS est qu'elle ne propose pas de mise en oeuvre du service IPTV dans les réseaux fixes ou mobiles. Les mécanismes prévus dans l'IMS, bien que définissant des procédures génériques pour les services multimédias, ne décrivent pas comment intégrer le service IPTV. Notamment, la récupération du plan de service, c'est-à-dire les chaînes souscrites par l'abonné et les adresses IP correspondantes, n'est pas possible dans l'état actuel de la norme.

II existe donc un besoin d'une technique permettant d'intégrer un service IPTV dans une architecture IMS pour les réseaux IP fixes ou mobiles et de définir un système permettant de récupérer le plan de service associé à l'utilisateur.

L'invention répond à ce besoin en proposant un système d'accès à un service dans un réseau de type IP présentant une architecture de type IMS, à partir d'un terminal d'utilisateur connecté audit réseau.

Selon l'invention, ledit service est un service de télévision sur IP, ledit utilisateur étant abonné à une liste d'au moins une chaîne de télévision dudit service, et ledit système comprend au moins un serveur d'application comprenant des moyens, activés sur réception d'une requête d'accès au service émise par ledit terminal, de:
- détermination d'informations d'abonnement dudit utilisateur à ladite liste et d'informations de capacité de réception nécessaire pour ladite au moins une chaîne;
- vérification de la compatibilité entre lesdites informations de capacité de réception nécessaire pour ladite au moins une chaîne et une capacité de réception offerte par ledit terminal;
- sélection d'au moins une chaîne de ladite liste, en fonction de ladite vérification de compatibilité;
- envoi audit terminal d'utilisateur d'une réponse à ladite requête, contenant au moins une information de réception de ladite au moins une chaîne sélectionnée.

Ainsi, l'architecture IMS permet d'intégrer le service de télévision sur IP lors de l'enregistrement du terminal dans l'IMS. Grâce à l'invention, le service IPTV peut ainsi bénéficier des avantages de l'IMS, à savoir intégration fixe/mobile, mutualisation et mécanismes génériques pour les services, interaction de services, réservation des ressources réseau, facturation mutualisée etc., ce qui n'était pas le cas dans les techniques utilisées pour l'IPTV dans l'art antérieur. En outre, l'offre de service IMS s'en trouve fortement enrichie, grâce à l'implémentation d'un service de type audiovisuel.

L'invention propose avantageusement une procédure nouvelle dans le cadre d'une architecture IMS, permettant de récupérer le Plan de Service associé à l'utilisateur, et rendant ainsi possible l'intégration d'un service IPTV dans une telle architecture.

Cette procédure repose notamment sur la vérification, par le serveur de l'application IPTV, noté AS IPTV, des droits de l'abonné dans une base de données associée au service, et sur la sélection par ce serveur AS IPTV d'une ou plusieurs chaînes parmi la liste de chaînes souscrites par l'abonné. Cette sélection repose sur une vérification préalable de la compatibilité des capacités de réception offertes par le terminal et des capacités de réception requises pour telle ou telle chaîne de télévision.

L'invention permet également d'utiliser les procédures liées à un protocole de signalisation, par exemple de type SIP ("Session Initiation Protocol") pour la requête d'accès au service et la récupération par le terminal des informations sur celles des chaînes souscrites par l'abonné qui ont été finalement retenues par le serveur de l'application IPTV, noté AS IPTV, à savoir notamment noms et adresses des chaînes TV dans le réseau de transport IP. Pour ce faire, le serveur AS IPTV insère, sur réception du message de requête d'accès SIP, des informations de réception sur la liste des chaînes souscrites dans des paramètres SDP ("Session Description Protocol") du message de réponse SIP et les envoie au terminal utilisateur avec le message de réponse.

La requête d'accès au service émise par le terminal peut être une requête d'activation initiale du service (par exemple lors de la mise sous tension d'un terminal audiovisuel), ou une requête de changement de service (par exemple lorsque le terminal souhaite modifier certains des paramètres du service auquel il accède déjà, comme la chaîne visionnée par exemple).

Une telle requête peut donc contenir certains paramètres relatifs au service demandé par le terminal, comme un identifiant de chaîne qu'il souhaite visionner, ou un niveau de service souhaité par exemple.

Selon une caractéristique avantageuse d'un mode de réalisation, le système de l'invention comprend également des moyens de réservation de ressources d'un réseau de transport nécessaires à la réception par ledit terminal de ladite au moins une chaîne sélectionnée.

Une telle réservation de ressources n'était pas définie dans les systèmes de télévision sur IP de l'art antérieur. Elle est particulièrement intéressante pour permettre une bonne réception par le terminal utilisateur du flux associé à la chaîne de télévision que l'on souhaite visionner. Dans le cas d'un réseau de transport disposant de ressources en très grande quantité, une telle réservation n'est cependant pas strictement nécessaire.

Ces moyens de réservation de ressource peuvent être implémentés dans un serveur mandataire, encore appelé proxy, du réseau à architecture IMS, et sont déclenchés lorsque ce proxy reçoit la réponse du serveur AS IPTV à la requête d'accès au service du terminal.

En définitive, le système conforme à l'invention permet donc de faire bénéficier au service de TV sur IP des nombreux avantages d'un réseau à architecture IMS qui consistent notamment à tirer parti :
- des mécanismes inhérents à l'IMS pour réserver les ressources nécessaires au sein du réseau de transport IP permettant la réception d'une chaîne TV,
- des mécanismes définis dans les entités IMS en ce qui concerne l'interaction entre les services IMS,
- des mécanismes de taxation définis dans l'IMS,
pour permettre à l'IMS d'enrichir son offre de services avec l'implémentation d'un service de type audiovisuel.

Selon une caractéristique avantageuse de l'invention, ladite capacité de réception offerte par ledit terminal est déterminée à partir d'au moins l'un des éléments appartenant au groupe comprenant:
- des informations de capacité de réception contenues dans ladite requête d'accès au service;
- un type dudit terminal.

En effet ce type, qui peut être par exemple indiqué dans le message INVITE émis par le terminal pour accéder au service, constitue une bonne indication des capacités de réception offertes par le terminal, et peut donc être utilisé par le serveur AS IPTV pour choisir la ou les chaînes de télévision que le terminal va être autorisé à visionner.

Les informations de capacité de réception contenues dans la requête d'accès au service peuvent quant à elle correspondre à des informations de capacité liées aux paramètres de connexion du terminal au réseau (par exemple le débit maximal auquel l'utilisateur a droit en fonction de son abonnement) ou des informations de niveau de service souhaité par le terminal (par exemple, le souhait du terminal de recevoir une chaîne de télévision en définition standard (SD) ou en haute définition (HD) par exemple).

Avantageusement, lesdites informations de réception appartiennent au groupe comprenant:
- un identifiant de ladite chaîne sélectionnée;
- une adresse de ladite chaîne sélectionnée;
- une capacité de réception requise pour ladite chaîne sélectionnée, ou plus généralement des caractéristiques réseau de la chaîne, comme par exemple le débit requis;
- une information représentative d'un contenu de ladite chaîne sélectionnée, qui pourrait être utilisée par exemple dans le cadre du contrôle parental.

Selon un autre aspect de l'invention, ledit réseau à architecture IMS comprend un serveur de routage disposant d'une information associant ledit terminal d'utilisateur à l'un desdits serveurs d'application et comprenant des moyens de routage de ladite requête d'accès au service vers ledit serveur d'application associé audit terminal.

Dans ce mode de réalisation, le serveur de routage, connu dans l'IMS sous l'acronyme S-CSCF («Serving-Call Session Control Function»), récupère, lors de l'enregistrement et de l'authentification du terminal dans l'IMS, le point de détection IFC ("Initial Filter Criteria") associé au service IPTV à partir d'une base de données contenant le profil de l'utilisateur en terme des points de détection de l'ensemble des services auxquels l'utilisateur a souscrit. La base de données contenant le profil de l'utilisateur est soit une base du type UPSF («User Profile Server Function») définie à TISPAN, soit une base du type HSS («Home Subscriber Server») définie au 3GPP.

A réception d'une requête d'accès au service IPTV, le serveur S-CSCF, ayant identifié l'utilisateur dans le message, récupère auprès de la base utilisateur les points de détection associés, et notamment celui correspondant au serveur AS IPTV. Il identifie ainsi le serveur AS IPTV vers lequel il doit déclencher le routage de la requête d'accès émise par le terminal.

Dans une variante de réalisation de l'invention, la requête d'accès au service émise par le terminal contient une adresse du serveur d'application AS IPTV, c'est-à-dire un identifiant de routage du serveur de télévision dans le réseau à architecture IMS.

Cet identifiant peut être un identifiant SIP appelé URI («Uniform Resource Identifier»).

Dans ce cas, le message de demande d'activation du service IPTV est directement acheminé vers le serveur AS IPTV via le serveur S-CSCF, lequel ne joue alors que le rôle de simple routeur.

Selon une autre caractéristique avantageuse de l'invention, ledit terminal d'utilisateur comprend des moyens de traitement desdites informations de réception de ladite chaîne sélectionnée et des moyens de réception d'un flux correspondant à ladite chaîne. Ainsi, le terminal extrait par exemple des informations de réception l'adresse IP de la chaîne de télévision qu'il souhaite visionner et utilise cette adresse IP pour obtenir, de la source TV, via le réseau de transport, le flux associé à cette chaîne.

Dans un mode de réalisation avantageux de l'invention, ledit serveur d'application comprend également des moyens de détermination d'un identifiant de session contenu dans ladite requête d'accès émise par ledit terminal et des moyens permettant de vérifier si ledit identifiant de session correspond à une session déjà en cours avec ledit terminal.

Lorsque le serveur d'application AS IPTV détecte qu'une session est déjà en cours avec le terminal, car l'identifiant de session est inchangé par rapport à la précédente requête reçue du même terminal, il en déduit que la requête reçue n'est donc pas une requête d'initialisation du service mais une requête de changement du service. Il maintient alors la session courante, et active ses moyens d'envoi d'une réponse vers le terminal en insérant dans son message de réponse les informations de réception qui ont changé par rapport à son message de réponse précédent pour satisfaire la nouvelle requête du terminal d'utilisateur.

L'invention concerne également un serveur d'application d'un système d'accès à un service dans un réseau de type IP présentant une architecture de type IMS, à partir d'un terminal d'utilisateur connecté audit réseau. Selon l'invention, un tel serveur est un serveur de télévision sur IP, et comprend des moyens, activés sur réception d'une requête d'accès au service émise par ledit terminal, de:
- détermination d'informations d'abonnement dudit utilisateur à ladite liste et d'informations de capacité de réception nécessaire pour ladite au moins une chaîne;
- vérification de la compatibilité entre lesdites informations de capacité de réception nécessaire pour ladite au moins une chaîne et une capacité de réception offerte par ledit terminal;
- sélection d'au moins une chaîne de ladite liste, en fonction de ladite vérification de compatibilité;
- envoi audit terminal d'utilisateur d'une réponse à ladite requête, contenant au moins une information de réception de ladite au moins une chaîne sélectionnée.

L'invention concerne aussi un terminal d'accès à un service dans un réseau de type IP présentant une architecture de type IMS, qui comprend:
- des moyens d'émission d'une requête d'accès à un service de télévision sur IP vers un serveur d'application de télévision sur IP dudit réseau à architecture de type IMS, un utilisateur dudit terminal étant abonné à une liste d'au moins une chaîne de télévision dudit service, ladite requête d'accès comprenant des informations de capacité de réception offerte par ledit terminal,
- des moyens de traitement d'une réponse à ladite requête, émise par ledit serveur d'application, et contenant au moins une information de réception d'au moins une chaîne sélectionnée dans ladite liste par ledit serveur d'application;
- des moyens de réception d'un flux correspondant à ladite chaîne sélectionnée.

L'invention concerne encore un procédé d'accès à un service dans un réseau de type IP présentant une architecture de type IMS, à partir d'un terminal d'utilisateur connecté audit réseau. Selon l'invention, ledit service est un service de télévision sur IP, ledit utilisateur étant abonné à une liste d'au moins une chaîne de télévision dudit service, et ledit procédé comprend:
- une étape de réception d'une requête d'accès au service émise par ledit terminal;
- une étape de détermination d'informations d'abonnement dudit utilisateur à ladite liste et d'informations de capacité de réception nécessaire pour ladite au moins une chaîne;
- une étape de vérification de la compatibilité entre lesdites informations de capacité de réception nécessaire pour ladite au moins une chaîne et une capacité de réception offerte par ledit terminal;
- une étape de sélection d'au moins une chaîne de ladite liste, en fonction de ladite vérification de compatibilité;
- une étape d'envoi audit terminal d'utilisateur d'une réponse à ladite requête, contenant au moins une information de réception de ladite au moins une chaîne sélectionnée.

Enfin, l'invention concerne un programme d'ordinateur comprenant des instructions de code de programme pour la mise en oeuvre des étapes du procédé d'accès à un service tel que décrit précédemment.

La description qui va suivre en regard des dessins annexés, donnés à titre d'exemples non limitatifs, fera bien comprendre en quoi consiste l'invention et comment elle peut être réalisée.
La figure 1 est un schéma représentant une architecture de réseaux pour l'activation d'un service de télévision sur IP, conformément à l'invention.
La figure 2 est un diagramme illustrant une phase d'activation du service de télévision.
La figure 3 est un diagramme illustrant une phase d'interruption du service de télévision.

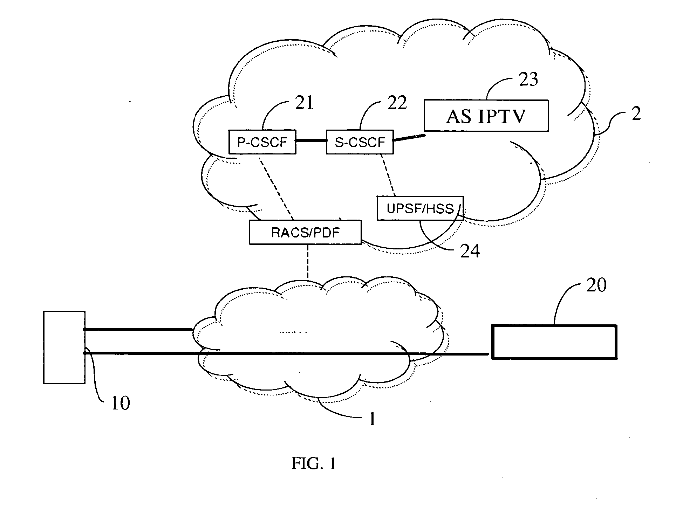

Sur la figure 1 est représenté un système pour l'activation d'un service IPTV de télévision sur un réseau 1 de transport IP à travers lequel un terminal 10 peut recevoir les flux médias fournis par une source TV 20, un utilisateur du terminal 10 ayant au préalable souscrit un abonnement à une ou plusieurs chaînes de télévision auprès d'un opérateur ou d'un fournisseur tiers associé.

Le terminal 10 est un terminal fixe ou mobile qui comprend des moyens de restitution d'un contenu audiovisuel et des moyens de signalisation SIP. Le terminal 10 au sens de l'invention peut par exemple être constitué d'un terminal audiovisuel de l'art antérieur (tel qu'un téléviseur) et d'un client SIP, ces deux éléments pouvant être physiquement dissociés ou intégrés dans un même boîtier. Le terminal 10 peut ainsi être un téléphone mobile avec écran, ou intégrer une Set Top Box et un écran de visualisation, etc.

Comme le montre la figure 1, l'activation du service IPTV est effectuée à partir du terminal 10 dans un réseau 2 à architecture IMS qui comprend:
- un serveur mandataire P-CSCF («Proxy-CSCF» pour "Proxy-Call Server Control Function") 21 qui est le premier point de contact avec le terminal 10 de l'abonné utilisateur dans le réseau IMS et qui gère l'interaction avec les ressources du réseau 1 de transport IP,
- un serveur 22 de routage S-CSCF qui gère l'abonné dans le réseau IMS et, notamment, les points de déclenchement (encore appelés points de détection, ou IFC) vers des serveurs auprès desquels l'utilisateur a souscrit. Le serveur S-CSCF 22 est attribué à l'utilisateur par un serveur I-CSCF («Interrogating-CSCF»), non représenté, lors de l'enregistrement du terminal 10 dans le réseau IMS,
- un serveur 23 de télévision sur IP, noté AS IPTV, qui est un élément nouveau de l'architecture IMS de l'invention par rapport à une architecture IMS de l'art antérieur. Il s'agit d'un serveur SIP qui permet d'allouer à l'utilisateur une ou plusieurs chaînes parmi celles auxquelles il a souscrit. Cette allocation est effectuée à la suite d'une demande d'activation du service par l'utilisateur, selon une procédure qui sera décrite en détail plus loin. Le serveur AS IPTV 23 contient des informations relatives à l'abonnement de l'utilisateur fournies par l'opérateur du service ou un fournisseur tiers associé, telles que les chaînes souscrites, et des informations relatives au réseau 1 de transport, comme les capacités de réception et l'adresse IP de chaque chaîne,
- une base 24 de données, UPSF ou HSS, contenant le profil de l'utilisateur en terme de services souscrits et, en particulier ici, le service IPTV défini par les chaînes de télévision auxquelles l'utilisateur souhaite s'abonner. Cette base 24 est également renseignée par l'opérateur du service ou un fournisseur tiers associé, après que l'utilisateur a souscrit son abonnement sur une page web ou par téléphone ; elle contient les points de détection associés à l'utilisateur, notamment celui du serveur AS IPTV 23. Cette base 24 de données est interrogée par les proxys SIP S-CSCF et I-CSCF lors de la phase d'enregistrement du terminal d'utilisateur.

Dans le réseau 2 à architecture IMS décrit ci-dessus, les différents serveurs proxy SIP P-CSCF, S-CSCF et I-CSCF peuvent être localisés deux à deux ou ensemble dans un même équipement.

Quand, après avoir souscrit son abonnement au service IPTV, l'utilisateur souhaite effectivement activer le service, une phase, dite d'enregistrement dans le réseau IMS, a lieu préalablement à la phase d'activation, ou d'accès, proprement dite.

La phase d'enregistrement est effectuée automatiquement ou par l'envoi par le terminal 10 d'un message d'enregistrement, par exemple de type SIP «Register» comprenant notamment une identification de l'abonné dans le réseau IMS 2. Le message «Register» parvient au serveur «proxy» P-CSCF 21 qui le transmet à un serveur I-CSCF, non représenté, lequel attribue un serveur S-CSCF 22 au terminal 10.

Selon une première réalisation, le serveur S-CSCF 22 récupère de la base 24 de données utilisateur, UPSF ou HSS, les points de détection associés contenant, entre autres, le point de détection du serveur AS IPTV 23 permettant l'activation du service IPTV.

Dans une autre réalisation, l'opérateur peut choisir d'inclure dans le message SIP «Invite» de requête d'accès au service, décrit ci-après, l'identifiant de routage SIP URI du serveur AS IPTV 23. Dans ce cas, vis-à-vis du service IPTV, le serveur S-CSCF 22 se comporte comme un simple routeur du message «Invite» vers le serveur AS IPTV 23.

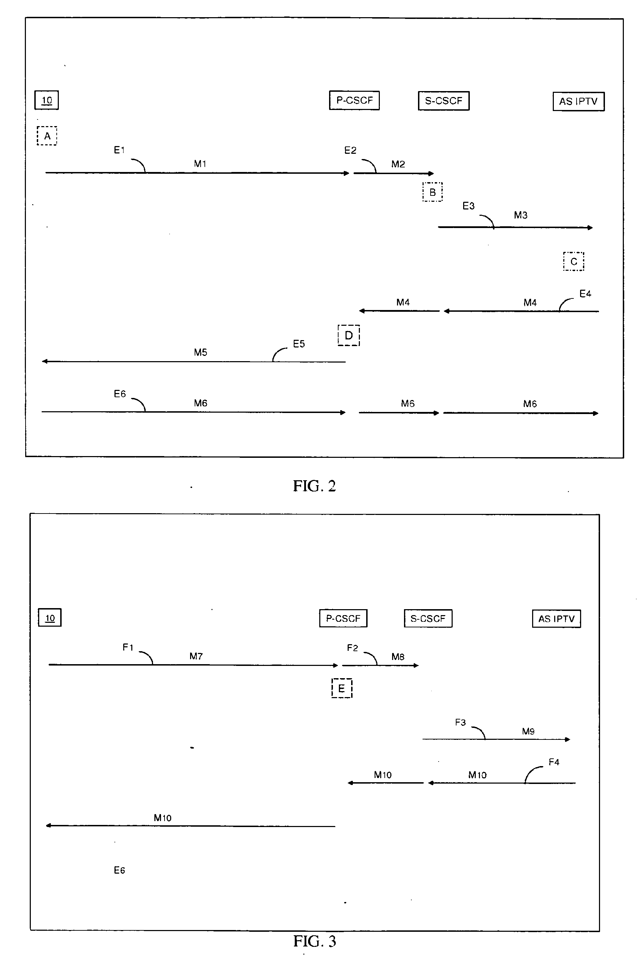

Le terminal 10, ainsi enregistré dans le réseau IMS 2, peut alors accéder au service IPTV selon une procédure d'activation du service qui va maintenant être expliquée en référence à la figure 2.

Après enregistrement dans le réseau IMS 2, l'utilisateur se trouve dans un état "enregistré" A et déclenche l'activation du service IPTV à partir du terminal 10, en allumant par exemple son téléviseur fixe ou en activant l'applicatif «TV» sur son téléphone mobile.

Le terminal 10, fixe ou mobile, envoie (étape E1) au serveur P-CSCF 21 un message M1 SIP «Invite» de requête d'accès au service IPTV. Ce message contient des données SDP concernant notamment les informations de capacité pour la réception des chaînes offerte par le terminal, comme par exemple les codecs supportés, ainsi que la description du protocole de contrôle permettant la sélection d'une chaîne sur le terminal («zapping»), par exemple le protocole IGMP («Internet Group Management Protocol»).

Le serveur P-CSCF 21 transmet (étape E2) le message M2 «Invite» au serveur S-CSCF 22 gérant l'utilisateur.

Lors de la phase d'enregistrement, un point de détection (ou IFC pour "Initial Filter Criteria") a pu être positionné dans le serveur S-CSCF 22 sur réception du message «Register» relatif au service IPTV. Le serveur S-CSCF 22 reconnaît alors (B) ce point de détection et transmet le message «Invite» au serveur AS IPTV 23. Bien entendu, comme on l'a signalé plus haut, ce traitement n'est pas obligatoire si l'identifiant URI de destination relative au serveur AS IPTV 23 a été indiqué directement dans le message «Invite».

Sur réception du message, le serveur S-CSCF 22 transmet (étape E3) la demande d'activation M3 au serveur AS IPTV 23.

Lorsqu'il reçoit le message «Invite», le serveur AS IPTV 23 vérifie les droits de l'abonné dans une base de données associée au service et extrait une ou plusieurs chaînes parmi la liste des chaînes souscrites. La détermination (C) de cette liste de chaînes, appelée aussi «plan de service», se fait en vérifiant la compatibilité entre les informations de capacité requise pour la réception de chaque chaîne et les informations de capacité de réception du terminal, qui peuvent provenir par exemple des capacités indiquées dans le SDP ou du type de terminal indiqué dans le message «Invite». Cette liste peut recouvrir la liste complète des chaînes souscrites. La liste des chaînes choisies comprend, pour chaque chaîne:
- un identifiant de la chaîne, par exemple son nom,
- une adresse IP de la chaîne,
- éventuellement, des caractéristiques de la chaîne sur le réseau 1 de transport, comme le débit requis.

La réponse envoyée M4 (étape E4) par le serveur AS IPTV 23 contient la liste des chaînes choisies, insérée dans des paramètres SDP. Cette réponse peut être un message SIP «200 OK» en cas de succès, mais elle peut aussi être un autre message SIP déclenchant d'autres échanges intermédiaires de négociations ou encore un message d'échec.

Les adresses IP des chaînes précisées par l'AS peuvent être:
- des adresses de groupe «multicast»,
- des adresses «unicast».

La liste des chaînes est véhiculée dans les paramètres SDP. Suivant le protocole de transport utilisé, par exemple MPEG2-TS ou RTP («Real Time Protocol»), une chaîne particulière peut être décrite dans un ou plusieurs paramètres médias définis dans SDP. La description du média doit comprendre un identifiant de la chaîne, permettant au terminal 10 de savoir à quel(s) flux correspond telle chaîne. Cet identifiant permet aussi de corréler les médias relatifs à la même chaîne. Par exemple, il peut contenir le nom de la chaîne et le bouquet qui fournit sa diffusion. Le paramètre "i" (media title) défini dans SDP peut être utilisé pour désigner la chaîne. Le media doit aussi inclure l'adresse IP de la chaîne, par exemple dans le champ "c" (connexion information). C'est cette adresse IP qui permettra au terminal 10 de recevoir la chaîne demandée à l'aide du protocole de sélection («zapping»). Par exemple, dans le cas d'IPTV sur accès fixe ADSL, si la diffusion des chaînes est réalisée en multicast, cette adresse est l'adresse multicast sur laquelle la chaîne est diffusée.

Sur réception du message SIP de réponse, le serveur P-CSCF 21 active la réservation (D) des ressources du réseau 1 de transport nécessaires pour la diffusion des chaînes choisies. Il peut également installer les règles (en anglais "policies") qui interdisent à l'utilisateur de sélectionner sur le terminal 10 les chaînes non choisies.

La réservation des ressources suit les spécifications 3GPP et TISPAN. Plusieurs chaînes TV peuvent être présentes dans les paramètres SDP sous forme de paramètres médias. Ces différentes chaînes présentes dans le SDP doivent pouvoir faire l'objet d'une seule réservation de ressources. En effet, il n'est pas nécessaire de réserver des ressources séparément pour toutes les chaînes, étant donné qu'une seule chaîne sera regardée à un moment donné. Ceci peut être précisé par le serveur AS IPTV 23 dans le SDP en utilisant la méthode indiquée dans les RFC 3388 sur le regroupement des médias et 3524 sur la réservation des ressources par flux de médias.

Dans le cas des téléphones mobiles, défini au 3GPP, le serveur P-CSCF 21 effectue une réservation de ressources vis-à-vis de la PDF («Policy Decision Function»). C'est ensuite le terminal qui est en charge d'établir, si besoin est, un ou plusieurs contextes PDP ("Packet Datagram Protocol") pour le transport du protocole de sélection («zapping») de chaînes et de la chaîne TV sélectionnée.

Dans le cas des terminaux fixes, défini au groupe TISPAN, le serveur P-CSCF 21 établit une demande de ressources auprès d'un sous-système de contrôle appelé RACS (pour "Resource and Admission Control Subsystem"), qui se charge d'établir les ressources et règles vis-à-vis du réseau 1 de transport.

Le serveur P-CSCF 21 envoie (étape E5) la réponse M5 au terminal 10. Celui-ci dispose maintenant d'une liste de chaînes permises et de leur(s) adresse(s) associée(s). Le terminal 10 peut également initier un ou plusieurs canaux particuliers correspondant au besoin de ressources pour la réception des chaînes et pour véhiculer les commandes de sélection de chaînes («zapping»), en particulier dans le cas des réseaux mobiles.

Enfin, le terminal 10 acquitte (étape E6) par un message M6 la réponse du serveur AS IPTV 23.

Lorsque l'utilisateur change de chaîne sur son terminal 10, par un procédé quelconque, ce changement de chaîne peut être signalé par l'envoi d'un message SIP, par exemple «Publish», qui sera relayé jusqu'au serveur AS IPTV 23, ceci afin d'effectuer notamment des mesures d'audience. L'envoi de ce message SIP peut être réalisé à chaque changement de chaîne, ou suite à un changement de chaîne et à une temporisation, si l'utilisateur reste plus de 10 secondes sur la chaîne sélectionnée par exemple. Ce mécanisme permet de réutiliser les éléments existants ou définis dans les architectures IMS pour gérer la présence.

Le protocole de sélection de chaînes («zapping») permettant le contrôle des flux TV reçus peut être, par exemple, le protocole IGMP dans le cas d'une diffusion des chaînes par flux «multicast». Dans ce cas, les paramètres SDP du message de réponse contiennent pour chaque chaîne l'adresse de groupe «multicast» correspondante. L'adresse de groupe retournée par le serveur AS IPTV 23 pour une même chaîne peut être différente suivant les capacités et le type du terminal 10.

Ce protocole de sélection de chaînes à partir du terminal 10 peut être aussi le protocole RTSP ("Real Time Streaming Protocol").

Un changement de niveau de service IPTV ayant des conséquences sur le réseau 1 de transport peut entraîner à nouveau les mécanismes SIP décrits dans la phase d'activation du service. Il est déclenché au niveau du terminal 10, lorsque l'utilisateur souhaite accéder à un service IPTV différent de celui qu'il a activé initialement (par exemple en cas de changement de la chaîne que l'utilisateur souhaite visionner, ou du niveau de définition de cette chaîne). Le terminal initie alors la procédure décrite ci-dessus, mais pour la même session IMS, c'est-à-dire avec le même identifiant de session que la session en cours, ce qui a pour conséquence de changer la réservation de ressources, si nécessaire.

Un cas d'usage particulièrement pertinent est le changement du niveau de définition des chaînes : passage de SD ("Standard Definition") à HD ("High Definition" pour "Haute Définition"). La réservation de ressources est alors différente d'un ensemble de chaînes à un autre.

Plus précisément, le terminal adresse une demande d'accès vers le serveur AS IPTV 23, contenant l'identifiant de session IMS de la session courante ainsi que le niveau de définition souhaité et/ou l'identifiant de la chaîne demandée. Le serveur AS IPTV 23 détecte alors que l'identifiant de session IMS est inchangé et correspond à une session déjà ouverte. Il répond donc à la demande du terminal 10 sans changer la session IMS, en lui envoyant simplement la ou les informations de réception qui doivent être modifiées par rapport à la session courante, dans un message SDP.

Ainsi, si l'utilisateur du terminal 10 visionne une chaîne d'identifiant CH1, diffusée en SD, et souhaite "zapper" vers une chaîne d'identifiant CH2, diffusée uniquement en HD, le terminal 10 adresse une requête vers le serveur AS IPTV 23 contenant l'identifiant de la session IMS en cours, ainsi que l'identifiant CH2 de la chaîne qu'il souhaite visionner. Le serveur AS IPTV 23 détecte que l'identifiant de session IMS est inchangé, et que la session courante doit donc se poursuivre. Il vérifie la compatibilité de la capacité de réception du terminal 10 et de la capacité de réception requise pour recevoir la chaîne CH2, qui est diffusée en HD (il vérifie par exemple que le terminal est capable de recevoir un flux en HD et n'est pas par exemple limité à la réception de flux en SD). En cas de compatibilité vérifiée, il active ses moyens d'envoi d'un message de réponse vers le terminal 10, dans lequel il insère les informations de réception relatives à la chaîne CH2 nécessaires au terminal 10, telles que par exemple l'adresse IP de cette chaîne CH2.

L'arrêt du service IPTV correspond à l'envoi du message SIP «Bye». Ce message déclenche la libération des ressources dans le réseau 1 de transport. La cinématique des échanges SIP lors d'une phase de terminaison de service est illustrée sur la figure 3.

L'utilisateur du terminal 10 décide de quitter le service IPTV, par exemple sur une mise en veille du poste de télévision ou une fermeture de l'applicatif «TV» sur le téléphone mobile. Il envoie (étape F1) un message M7 «Bye» au serveur P-CSCF 21. Dans le cas d'un téléphone mobile, le terminal 10 peut initier une ou plusieurs désactivations de contextes PDP.

Le serveur P-CSCF 21 libère (E) dans le réseau 1 de transport les ressources attribuées au service IPTV.

Le serveur P-CSCF 21 transmet (étape F2) le message M8 «Bye» au serveur S-CSCF 22.

Le serveur S-CSCF 22 transmet (étape F3) le message M9 «Bye» au serveur AS IPTV 23 qui répond dans un message SIP.

Le message M10 SIP de réponse est transmis (étape F4) au terminal 10 via les serveurs S-CSCF 22 et P-CSCF 21.

L'invention concerne également un programme d'ordinateur comprenant des instructions de code de programme pour la mise en oeuvre des étapes du procédé d'accès à un service tel que décrit ci-dessus.

Les instructions de code de programme ou modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Système d'accès à un service dans un réseau (2) de type IP présentant une architecture de type IMS, à partir d'un terminal (10) d'utilisateur connecté audit réseau (2),
**caractérisé en ce que** ledit service est un service de télévision sur IP, ledit utilisateur étant abonné à une liste d'au moins une chaîne de télévision dudit service,
et **en ce que** ledit système comprend au moins un serveur (23) d'application comprenant des moyens, activés sur réception d'une requête d'accès au service émise par ledit terminal (10), de:
- détermination d'informations d'abonnement dudit utilisateur à ladite liste et d'informations de capacité de réception nécessaire pour ladite au moins une chaîne;
- vérification de la compatibilité entre lesdites informations de capacité de réception nécessaire pour ladite au moins une chaîne et une capacité de réception offerte par ledit terminal;
- sélection d'au moins une chaîne de ladite liste, en fonction de ladite vérification de compatibilité;
- envoi audit terminal (10) d'utilisateur d'une réponse à ladite requête, contenant au moins une information de réception de ladite au moins une chaîne sélectionnée.

2. Système selon la revendication 1, **caractérisé en ce qu'**il comprend également des moyens de réservation de ressources d'un réseau de transport (1) nécessaires à la réception par ledit terminal (10) de ladite au moins une chaîne sélectionnée.

3. Système selon l'une quelconque des revendications 1 et 2, **caractérisé en ce que** ladite capacité de réception offerte par ledit terminal est déterminée à partir d'au moins l'un des éléments appartenant au groupe comprenant:
- des informations de capacité de réception contenues dans ladite requête d'accès au service;
- un type dudit terminal.

4. Système selon l'une quelconque des revendications 1 à 3, **caractérisé en ce que** ladite au moins une information de réception de ladite chaîne sélectionnée appartient au groupe comprenant:
- un identifiant de ladite chaîne sélectionnée;
- une adresse de ladite chaîne sélectionnée;
- une capacité de réception requise pour ladite chaîne sélectionnée;
- une information représentative d'un contenu de ladite chaîne sélectionnée.

5. Système selon l'une quelconque des revendications 1 à 4, **caractérisé en ce que** ledit réseau (2) comprend un serveur de routage (22) disposant d'une information associant ledit terminal d'utilisateur à l'un desdits serveurs d'application (23) et comprenant des moyens de routage de ladite requête d'accès au service vers ledit serveur d'application (23) associé audit terminal (10).

6. Système selon l'une quelconque des revendications 1 à 4, **caractérisé en ce que** ladite requête d'accès au service émise par ledit terminal contient une adresse dudit serveur d'application.

7. Système selon l'une quelconque des revendications 1 à 6, **caractérisé en ce que** ledit terminal d'utilisateur comprend des moyens de traitement de ladite au moins une information de réception de ladite au moins une chaîne sélectionnée et des moyens de réception d'un flux correspondant à ladite chaîne.

8. Système selon l'une quelconque des revendications 1 à 7, **caractérisé en ce que** ledit serveur d'application (23) comprend également des moyens de détermination d'un identifiant de session contenu dans ladite requête d'accès émise par ledit terminal et des moyens permettant de vérifier si ledit identifiant de session correspond à une session déjà en cours avec ledit terminal (10).

9. Serveur (23) d'application d'un système d'accès à un service dans un réseau (2) de type IP présentant une architecture de type IMS, à partir d'un terminal (10) d'utilisateur connecté audit réseau (2),
**caractérisé en ce que** ledit serveur est un serveur de télévision sur IP,
et comprend des moyens, activés sur réception d'une requête d'accès au service émise par ledit terminal (10), de:
- détermination d'informations d'abonnement dudit utilisateur à ladite liste et d'informations de capacité de réception nécessaire pour ladite au moins une chaîne;
- vérification de la compatibilité entre lesdites informations de capacité de réception nécessaire pour ladite au moins une chaîne et une capacité de réception offerte par ledit terminal;
- sélection d'au moins une chaîne de ladite liste, en fonction de ladite vérification de compatibilité;
- envoi audit terminal (10) d'utilisateur d'une réponse à ladite requête, contenant au moins une information de réception de ladite au moins une chaîne sélectionnée.

10. Serveur selon la revendication 9, comprenant en outre des moyens de détermination d'un identifiant de session contenu dans ladite requête d'accès émise par ledit terminal et des moyens permettant de vérifier si ledit identifiant de session correspond à une session déjà en cours avec ledit terminal (10).

11. Terminal (10) d'accès à un service dans un réseau (2) de type IP présentant une architecture de type IMS,
**caractérisé en ce qu'**il comprend:
- des moyens d'émission d'une requête d'accès à un service de télévision sur IP vers un serveur d'application de télévision sur IP dudit réseau à architecture de type IMS, un utilisateur dudit terminal étant abonné à une liste d'au moins une chaîne de télévision dudit service, ladite requête d'accès comprenant des informations de capacité de réception offerte par ledit terminal,
- des moyens de traitement d'une réponse à ladite requête, émise par ledit serveur d'application, et contenant au moins une information de réception d'au moins une chaîne sélectionnée dans ladite liste par ledit serveur d'application;
- des moyens de réception d'un flux correspondant à ladite chaîne sélectionnée.

12. Procédé d'accès à un service dans un réseau (2) de type IP présentant une architecture de type IMS, à partir d'un terminal (10) d'utilisateur connecté audit réseau (2),
**caractérisé en ce que** ledit service est un service de télévision sur IP, ledit utilisateur étant abonné à une liste d'au moins une chaîne de télévision dudit service,
et **en ce que** ledit procédé comprend:
- une étape de réception d'une requête d'accès au service émise par ledit terminal (10);
- une étape de détermination d'informations d'abonnement dudit utilisateur à ladite liste et d'informations de capacité de réception nécessaire pour ladite au moins une chaîne;
- une étape de vérification de la compatibilité entre lesdites informations de capacité de réception nécessaire pour ladite au moins une chaîne et une capacité de réception offerte par ledit terminal;
- une étape de sélection d'au moins une chaîne de ladite liste, en fonction de ladite vérification de compatibilité;
- une étape d'envoi audit terminal (10) d'utilisateur d'une réponse à ladite requête, contenant au moins une information de réception de ladite au moins une chaîne sélectionnée.

13. Programme d'ordinateur comprenant des instructions de code de programme pour la mise en oeuvre des étapes du procédé d'accès à un service selon la revendication 12 quand il est executé sur un ordinateur.

## Claims

1. System for accessing a service in an IP-type network (2) having an IMS-type architecture, from a user terminal (10) connected to said network (2),
**characterized in that** said service is a television-over-IP service, said user being a subscriber to a list of at least one television channel of said service,
and **in that** said system comprises at least one application server (23) comprising means, activated on receipt of a service access request sent by said terminal (10), of:
- determining information items concerning the subscription of said user to said list and information concerning the reception capability needed for said at least one channel;
- checking compatibility between said information concerning the reception capability needed for said at least one channel and a reception capability offered by said terminal;
- selection of at least one channel from said list, according to said compatibility check;
- sending to said user terminal (10) a response to said request, containing at least one information item concerning the reception of said at least one selected channel.

2. System according to Claim 1, **characterized in that** it also comprises means of reserving the resources of a transport network (1) needed for the reception by said terminal (10) of said at least one selected channel.

3. System according to either of Claims 1 and 2, **characterized in that** said reception capability offered by said terminal is determined from at least one of the elements belonging to the group comprising:
- reception capability information contained in said service access request;
- a type of said terminal.

4. System according to any one of Claims 1 to 3, **characterized in that** said at least one information item concerning reception of said selected channel belongs to the group comprising:
- an identifier of said selected channel;
- an address of said selected channel;
- a reception capability required for said selected channel;
- an information item representative of a content of said selected channel.

5. System according to any one of Claims 1 to 4, **characterized in that** said network (2) comprises a routing server (22) having an information item associating said user terminal with one of said application servers (23) and comprising means of routing said service access request to said application server (23) associated with said terminal (10).

6. System according to any one of Claims 1 to 4, **characterized in that** said service access request sent by said terminal contains an address of said application server.

7. System according to any one of Claims 1 to 6, **characterized in that** said user terminal comprises means of processing said at least one information item concerning reception of said at least one selected channel and means of receiving a stream corresponding to said channel.

8. System according to any one of Claims 1 to 7, **characterized in that** said application server (23) also comprises means of determining a session identifier contained in said access request sent by said terminal and means for checking whether said session identifier corresponds to a session that is already in progress with said terminal (10).

9. Application server (23) of a system for accessing a service in an IP-type network (2) having an IMS-type architecture, from a user terminal (10) connected to said network (2),
**characterized in that** said server is a television-over-IP server,
and comprises means, activated on receipt of a service access request sent by said terminal (10), of:
- determining information concerning the subscription of said user to said list and information concerning the reception capability needed for said at least one channel;
- checking compatibility between said information concerning the reception capability needed for said at least one channel and a reception capability offered by said terminal;
- selection of at least one channel from said list, according to said compatibility check;
- sending to said user terminal (10) a response to said request, containing at least one information item concerning the reception of said at least one selected channel.

10. Server according to Claim 9, also comprising means of determining a session identifier contained in said access request sent by said terminal and means for checking whether said session identifier corresponds to
a session that is already in progress with said terminal (10).

11. Terminal (10) for accessing a service in an IP-type network (2) having an IMS-type architecture, **characterized in that** it comprises:
- means of sending a request to access a television-over-IP service to a television-over-IP application server of said network with IMS-type architecture, a user of said terminal being a subscriber to a list of at least one television channel of said service, said access request comprising information concerning the reception capability offered by said terminal,
- means of processing a response to said request, sent by said application server, and containing at least one information item concerning reception of at least one channel selected in said list by said application server;
- means of receiving a stream corresponding to said selected channel.

12. Method of accessing a service in an IP-type network (2) having an IMS-type architecture, from a user terminal (10) connected to said network (2),
**characterized in that** said service is a television-over-IP service, said user being a subscriber to a list of at least one television channel of said service,
and **in that** said method comprises:
- a step for receiving a request to access the service sent by said terminal (10);
- a step for determining information items concerning the subscription of said user to said list and information concerning the reception capability needed for said at least one channel;
- a step for checking compatibility between said information concerning the reception capability needed for said at least one channel and a reception capability offered by said terminal;
- a step for selecting at least one channel from said list, according to said compatibility check;
- a step for sending to said user terminal (10) a response to said request, containing at least one information item concerning the reception of said at least one selected channel.

13. Computer program comprising program code instructions for implementing the steps of the method of accessing a service according to Claim 12 when it is run on a computer.

## Patentansprüche

1. System für den Zugriff auf einen Dienst in einem Netzwerk (2) vom Typ IP, das eine Architektur vom Typ IMS aufweist, ausgehend von einem Benutzerendgerät (10), das mit dem Netzwerk (2) verbunden ist,
**dadurch gekennzeichnet, dass** der Dienst ein IP-Fernsehdienst ist, wobei der Benutzer eine Liste von mindestens einem Fernsehkanal des Diensts abonniert hat,
und dass das System außerdem mindestens einen Anwendungsserver (23) aufweist, der Einrichtungen enthält, die bei Empfang einer vom Endgerät (10) gesendeten Zugriffsanforderung auf den Dienst aktiviert werden, zur:
- Bestimmung von Informationen über das Abonnement der Liste durch den Benutzer und von Informationen über die für den mindestens einen Kanal notwendige Empfangskapazität;
- Prüfung der Kompatibilität zwischen den Informationen über die für den mindestens einen Kanal notwendige Empfangskapazität und einer vom Endgerät angebotenen Empfangskapazität;
- Auswahl mindestens eines Kanals der Liste in Abhängigkeit von der Kompatibilitätsprüfung;
- Senden an das Benutzerendgerät (10) einer Antwort auf die Anforderung, die mindestens eine Empfangsinformation des mindestens einen ausgewählten Kanals enthält.

2. System nach Anspruch 1, **dadurch gekennzeichnet, dass** es ebenfalls Einrichtungen zur Reservierung von Ressourcen eines Transportnetzwerks (1) enthält, die für den Empfang des mindestens einen ausgewählten Kanals durch das Endgerät (10) notwendig sind.

3. System nach einem der Ansprüche 1 und 2, **dadurch gekennzeichnet, dass** die vom Endgerät angebotene Empfangskapazität ausgehend von mindestens einem der Elemente bestimmt wird, die zu der Gruppe gehören, die enthält:
- Empfangskapazitätsinformationen, die in der Dienstzugriffsanforderung enthalten sind;
- einen Typ des Endgeräts.

4. System nach einem der Ansprüche 1 bis 3, **dadurch gekennzeichnet, dass** die mindestens eine Empfangsinformation des ausgewählten Kanals zu der Gruppe gehört, die enthält:
- eine Kennung des ausgewählten Kanals;
- eine Adresse des ausgewählten Kanals;
- eine erforderliche Empfangskapazität für den ausgewählten Kanal;
- eine für einen Inhalt des ausgewählten Kanals repräsentative Information.

5. System nach einem der Ansprüche 1 bis 4, **dadurch gekennzeichnet, dass** das Netzwerk (2) einen Routing-Server (22) enthält, der über eine das Benutzerendgerät mit einem der Anwendungsserver (23) verbindende Information verfügt und Einrichtungen zum Routen der Dienstzugriffsanforderung zu dem mit dem Endgerät (10) verbundenen Anwendungsserver (23) enthält.

6. System nach einem der Ansprüche 1 bis 4, **dadurch gekennzeichnet, dass** die vom Endgerät gesendete Dienstzugriffsanforderung eine Adresse des Anwendungsservers enthält.

7. System nach einem der Ansprüche 1 bis 6, **dadurch gekennzeichnet, dass** das Benutzerendgerät Einrichtungen zur Verarbeitung der mindestens einen Empfangsinformation des mindestens einen ausgewählten Kanals und Einrichtungen zum Empfang eines dem Kanal entsprechenden Flusses enthält.

8. System nach einem der Ansprüche 1 bis 7, **dadurch gekennzeichnet, dass** der Anwendungsserver (23) ebenfalls Einrichtungen zur Bestimmung einer Sitzungskennung, die in der vom Endgerät gesendeten Zugriffsanforderung enthalten ist, und Einrichtungen enthält, die es ermöglichen, zu prüfen, ob die Sitzungskennung einer bereits mit dem Endgerät (10) laufenden Sitzung entspricht.

9. Anwendungsserver (23) eines Zugriffssystems auf einen Dienst in einem Netzwerk (2) vom Typ IP, das eine Architektur vom Typ IMS aufweist, ausgehend von einem mit dem Netzwerk (2) verbundenen Benutzerendgerät (10),
**dadurch gekennzeichnet, dass** der Server ein IP-Fernsehserver ist,
und Einrichtungen, die bei Empfang einer vom Endgerät (10) gesendeten Dienstzugriffsanforderung aktiviert werden, enthält zur:
- Bestimmung von Informationen über das Abonnement der Liste durch den Benutzer und von Informationen über die für den mindestens einen Kanal notwendige Empfangskapazität;
- Prüfung der Kompatibilität zwischen den Informationen über die für den mindestens einen Kanal notwendige Empfangskapazität und einer vom Endgerät angebotenen Empfangskapazität;
- Auswahl mindestens eines Kanals der Liste in Abhängigkeit von der Kompatibilitätsprüfung;
- Senden an das Benutzerendgerät (10) einer Antwort auf die Anforderung, die mindestens eine Empfangsinformation des mindestens einen ausgewählten Kanals enthält.

10. Server nach Anspruch 9, der außerdem Einrichtungen zur Bestimmung einer Sitzungskennung, die in der vom Endgerät ausgegebenen Zugriffsanforderung enthalten ist, und Einrichtungen enthält, die es ermöglichen zu prüfen, ob die Sitzungskennung einer bereits mit dem Endgerät (10) laufenden Sitzung entspricht.

11. Endgerät (10) für den Zugriff auf einen Dienst in einem Netzwerk (2) vom Typ IP, das eine Architektur vom Typ IMS aufweist,
**dadurch gekennzeichnet, dass** es enthält:
- Einrichtungen zum Senden einer Zugriffsanforderung auf einen IP-Fernsehdienst an einen IP-Fernseh-Anwendungsserver des Netzwerks mit einer Architektur vom Typ IMS, wobei ein Benutzer des Endgeräts eine Liste von mindestens einem Fernsehkanal des Diensts abonniert hat, wobei die Zugriffsanforderung Informationen über die vom Endgerät angebotene Empfangskapazität enthält,
- Einrichtungen zur Verarbeitung einer Antwort auf die Anforderung, die vom Anwendungsserver gesendet wird und mindestens eine Empfangsinformation mindestens eines aus der Liste ausgewählten Kanals durch den Anwendungsserver enthält;
- Einrichtungen zum Empfang eines Flusses, der dem ausgewählten Kanal entspricht.

12. Zugriffsverfahren auf einen Dienst in einem Netzwerk (2) vom Typ IP, das eine Architektur vom Typ IMS aufweist, ausgehend von einem mit dem Netzwerk (2) verbundenen Benutzerendgerät (10),
**dadurch gekennzeichnet, dass** der Dienst ein IP-Fernsehdienst ist, wobei der Benutzer eine Liste mindestens eines Fernsehkanals des Diensts abonniert hat,
und dass das Verfahren enthält:
- einen Schritt des Empfangs einer vom Endgerät (10) gesendeten Zugriffsanforderung auf den Dienst;
- einen Schritt der Bestimmung von Informationen über das Abonnement der Liste durch den Benutzer und von Informationen über die für den mindestens einen Kanal notwendige Empfangskapazität;
- einen Schritt der Prüfung der Kompatibilität zwischen den Informationen über die für den mindestens einen Kanal notwendige Empfangskapazität und einer vom Endgerät angebotenen Empfangskapazität;
- einen Schritt der Auswahl mindestens eines Kanals aus der Liste in Abhängigkeit von der Kompatibilitätsprüfung;
- einen Schritt des Sendens an das Benutzerendgerät (10) einer Antwort auf die Anforderung, die mindestens eine Empfangsinformation des mindestens einen ausgewählten Kanals enthält.

13. Computerprogramm, das Programmcodeanweisungen für die Anwendung der Schritte des Zugriffsverfahrens auf einen Dienst nach Anspruch 12 enthält, wenn es in einem Computer ausgeführt wird.
